# EUROPEAN PATENT APPLICATION

(11) **EP 4 807 529 A1**
(43) Date of publication of application: **16.09.2026**
(21) Application number: 24916630.7
(22) Date of filing: 06.12.2024
(51) Int. Cl.: G06F 8/38

(54) **PAGE GENERATION METHOD AND APPARATUS, ELECTRONIC DEVICE, COMPUTER READABLE STORAGE MEDIUM, AND COMPUTER PROGRAM PRODUCT**

(30) Priority: 09.01.2024 CN 202410027518
(71) Applicant: Tencent Technology (Shenzhen) Company Limited, Shenzhen, Guangdong 518057 (CN)
(72) Inventor: FU, Boquan, Shenzhen, Guangdong 518057 (CN); HUANG, Sicheng, Shenzhen, Guangdong 518057 (CN); ZHONG, Tingrong, Shenzhen, Guangdong 518057 (CN)
(74) Representative: Gunzelmann, Rainer
(86) International application number: PCT/CN2024/137373
(87) International publication number: WO 2025/148583

(57) **Abstract**

This application provides a page generation method and apparatus, an electronic device, a storage medium, and a program product. The method includes: obtaining a node tree, the node tree including a plurality of nodes; obtaining a style attribute of a target node from the plurality of nodes , and determining a main axis size of the node based on the style attribute of the node, a parent node of the target node using a flexible layout; when the target node includes at least one child node, obtaining a parameter mapping table, and obtaining a secondary axis size of the target node based on the main axis size of the target node and the parameter mapping table; determining main axis coordinates and secondary axis coordinates of each node based on the main axis size and the secondary axis size of each node; and generating the to-be-laid out page according to the main axis size, the secondary axis size, the main axis coordinates, and the secondary axis coordinates of each node.

## Description

### RELATED APPLICATION

This application claims priority to Chinese Patent Application No. 202410027518.8, filed on January 9, 2024, which is incorporated herein by reference in its entirety.

### FIELD OF THE TECHNOLOGY

This application relates to the field of computer technologies, and in particular, to a page generation method and apparatus, an electronic device, a computer-readable storage medium, and a computer program product.

### BACKGROUND OF THE DISCLOSURE

With development of computer technologies, more user-oriented application programs are integrated on a terminal. The application program is an environment not supported by a browser engine. During page generation of the application program, a professional developer needs to use a layout engine to quickly achieve a complex layout effect.

Especially, for an embedded application program like a mini program embedded in another application, a layout engine used by the developer in a related technology usually supports only one layout manner, which not only cannot efficiently utilize performance of a browser, resulting in low resource utilization, but also has poor flexibility of page generation, making it difficult to adapt to constantly changing page design requirements. In addition, layout performance is low, resulting in long time required for the page generation.

### SUMMARY OF THE DISCLOSURE

Embodiments of this application provide a page generation method and apparatus, an electronic device, a computer-readable storage medium, and a computer program product, to shorten page generation time, and improve page generation efficiency.

Technical solutions in embodiments of this application are implemented as follows.

An embodiment of this application provides a page generation method, applied to an electronic device, where the method includes: obtaining a node tree, the node tree including a plurality of nodes for representing content in the to-be-laid out page; obtaining a style attribute of a target node from the plurality of nodes, and determining a main axis size of the target node based on the style attribute of the target node, wherein a parent node of the target node uses a flexible layout; when the target node has at least one child node, obtaining a parameter mapping table, and obtaining a secondary axis size of the target node based on the main axis size of the target node and the parameter mapping table, the parameter mapping table including a mapping relationship between the style attribute and a size value; determining main axis coordinates and secondary axis coordinates of each node based on the main axis size and the secondary axis size of each node; and generating the to-be-laid out page according to the main axis size, the secondary axis size, the main axis coordinates, and the secondary axis coordinates of each node.

An embodiment of this application provides a page generation apparatus, the apparatus including: a node tree obtaining module, configured to obtain a node tree, the node tree including a plurality of nodes for representing content in the to-be-laid out page; a main axis size determining module, configured to: obtain a style attribute of a target node from the plurality of nodes, and determine a main axis size of the target node based on the style attribute of the target node, wherein a parent node of the target node uses a flexible layout; a secondary axis size determining module, configured to: when the target node includes at least one child node, obtain a parameter mapping table, and obtain a secondary axis size of the target node based on the main axis size of the target node and the parameter mapping table, the parameter mapping table including a mapping relationship between the style attribute and a size value; a coordinate determining module, configured to determine main axis coordinates and secondary axis coordinates of each node based on the main axis size and the secondary axis size of each node; and a layout module, configured to generate the to-be-laid out page according to the main axis size, the secondary axis size, the main axis coordinates, and the secondary axis coordinates of each node.

In the foregoing solution, the style attribute includes a node size limit attribute and a base value attribute, the node size limit attribute includes a main axis size limit attribute, and the main axis size determining module is further configured to: when an attribute value of the base value attribute of the target node is not a default value, determine the attribute value of the base value attribute as an initial size of the target node; or when an attribute value of the base value attribute of the target node is a default value, and an attribute value of the main axis size limit attribute of the target node is not a default value, determine the attribute value of the main axis size limit attribute as an initial size of the target node; and determine the main axis size of the target node based on the initial size and the style attribute of the target node.

In the foregoing solution, the main axis size determining module is further configured to: when the attribute value of the base value attribute of the target node is the default value, and the attribute value of the main axis size limit attribute of the target node is the default value, if the target node includes at least one child node, invoke a preset recursive function for the target node, to determine initial sizes of all child nodes of the target node; sum the initial sizes of the child nodes, to obtain the initial size of the target node; and determine the main axis size of the target node based on the initial size and the style attribute of the target node.

In the foregoing solution, the style attribute includes a text width limit attribute, and the main axis size determining module is further configured to: when the attribute value of the base value attribute of the target node is the default value, and the attribute value of the main axis size limit attribute of the target node is the default value, if the target node does not include the child node, and an attribute value of the text width limit attribute of the target node is a default value, obtain a text width occupied when a text in the target node is arranged in a row, and determine the text width as the initial size of the target node; or when the attribute value of the base value attribute of the target node is the default value, and the attribute value of the main axis size limit attribute of the target node is the default value, if the target node does not include the child node, and the attribute value of the text width limit attribute of the target node is not a default value, determine the attribute value of the text width limit attribute as the initial size of the target node; and determine the main axis size of the target node based on the initial size and the style attribute of the target node.

In the foregoing solution, the main axis size determining module is further configured to: sum initial sizes of all child nodes of the parent node of the target node, to obtain a sum of the initial sizes; and when the sum of the initial sizes is less than an attribute value of a main axis size limit attribute of the parent node, if an attribute value of a flexible growth attribute of the target node is greater than 0, extend the initial size of the target node based on the attribute value of the flexible growth attribute, to obtain the main axis size of the target node; or when the sum of the initial sizes is less than an attribute value of a main axis size limit attribute of the parent node, if an attribute value of a flexible shrink attribute of the target node is greater than 0, compress the initial size of the target node based on the attribute value of the flexible shrink attribute, to obtain the main axis size of the target node.

In the foregoing solution, the style attribute includes a secondary axis alignment attribute, and the secondary axis size determining module is further configured to: when an attribute value of the secondary axis alignment attribute of the target node is not stretch, invoke the preset recursive function for the target node, to obtain a leaf node of the target node and a main axis size of the leaf node; determine a secondary axis size of the leaf node according to the main axis size of the leaf node and the parameter mapping table; transmit the secondary axis size of the leaf node to a parent node of the leaf node, and determine a secondary axis size of the parent node of the leaf node according to the secondary axis size of the leaf node, a main axis size of the parent node of the leaf node, and the parameter mapping table; and sequentially perform recursion until the secondary axis size of the target node is determined.

In the foregoing solution, the secondary axis size determining module is further configured to: determine a target style attribute from the parameter mapping table, an attribute value of a main axis size limit attribute in the target style attribute being equal to the main axis size of the leaf node; and determine, from the parameter mapping table, a target size value corresponding to the target style attribute, and determine the target size value as the secondary axis size of the leaf node.

In the foregoing solution, the secondary axis size determining module is further configured to: when the attribute value of the secondary axis alignment attribute of the target node is stretch, and an attribute value of a secondary axis size limit attribute of the parent node of the target node is not a default value, determine the attribute value of the secondary axis size limit attribute of the parent node as a secondary axis limit size of the parent node; and determine the secondary axis limit size of the parent node as the secondary axis size of the target node.

In the foregoing solution, the secondary axis size determining module is further configured to: when the attribute value of the secondary axis alignment attribute of the target node is stretch, and the attribute value of the secondary axis size limit attribute of the parent node of the target node is the default value, determine an initial secondary axis size of the target node according to the main axis size of the target node and the parameter mapping table; obtain an initial secondary axis size of a brother node of the target node; and determine a largest value in the initial secondary axis sizes of the target node and the brother node as the secondary axis size of the target node.

In the foregoing solution, the coordinate determining module is further configured to: invoke the preset recursive function for each node, and determine a main axis size, a secondary axis size, main axis coordinates, and secondary axis coordinates of each child node of each node based on the main axis size and the secondary axis size of each node.

An embodiment of this application provides an electronic device, the electronic device including:
a memory, configured to store computer-executable instructions and a computer program; and
a processor, configured to implement, when executing the computer-executable instructions or the computer program stored in the memory, the page generation method provided in embodiments of this application.

This application provides a computer-readable storage medium, having a computer program or computer-executable instructions stored therein, the computer program or the computer-executable instructions, when executed by a processor, implementing the page generation method provided in embodiments of this application.

An embodiment of this application provides a computer program product, including a computer program or computer-executable instructions, the computer program or the computer-executable instructions, when executed by a processor, implementing the page generation method provided in embodiments of this application.

Embodiments of this application have the following beneficial effects:

During page generation, a to-be-laid out page is first converted into a node tree. When a parent node of a node uses a flexible layout, a parameter mapping table may be obtained. After a main axis size of the node is determined based on a style attribute of the node, a secondary axis size of the node is determined based on the main axis size of the node and the parameter mapping table. Then, main axis coordinates and secondary axis coordinates of the node are determined based on the secondary axis size and the main axis size. The to-be-laid out page is generated according to the main axis size, the secondary axis size, the main axis coordinates, and the secondary axis coordinates of each node. In embodiments of this application, because the parameter mapping table includes a mapping relationship between the style attribute and a size value, for each node, a main axis size of the node is used as one item in the style attribute, and a corresponding size value may be directly obtained from the parameter mapping table based on the main axis size of the node, and is used as a secondary axis size of the node, thereby saving calculation time. In addition, when the page is updated and positions of all nodes need to be recalculated, the size value in the parameter mapping table may also be directly used. This not only improves flexibility of the page generation, to improve browser resource utilization, but also can further shorten time required for the page generation, and improve layout performance, to improve page rendering efficiency.

### DETAILED DESCRIPTION OF THE DRAWINGS

FIG. 1 is a schematic structural diagram of a page generation system architecture according to an embodiment of this application.

FIG. 2 is a schematic structural diagram of an electronic device according to an embodiment of this application.

FIG. 3A is a schematic flowchart of a page generation method according to an embodiment of this application.

FIG. 3B is a schematic diagram of effects of a parent node and a child node on a page according to an embodiment of this application.

FIG. 3C is a schematic diagram of an implementation procedure of determining a main axis size according to an embodiment of this application.

FIG. 3D is a schematic diagram of an implementation procedure of determining a main axis size according to an embodiment of this application.

FIG. 4 is a schematic diagram in which nodes do not fully occupy a main axis according to an embodiment of this application.

FIG. 5 is a schematic diagram in which nodes extend beyond a main axis according to an embodiment of this application.

### DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following descriptions, the term "some embodiments" describes a subset of all possible embodiments, but "some embodiments" may be the same subset or different subsets of all the possible embodiments, and may be combined with each other without conflict.

In embodiment of this application, the term "module" or "unit" refers to a computer program with a preset function or a part of the computer program and works, together with other related parts, to implement a preset target, and may be completely or partially implemented by using software, hardware (for example, a processing circuit or a memory) or a combination thereof. Similarly, one processor (or a plurality of processors or memories) may be configured to implement one or more modules or units. In addition, each module or unit may be a part of an overall module or unit including a function of the module or unit.

Unless otherwise defined, meanings of all technical and scientific terms used in embodiments of this application are the same as those usually understood by a person skilled in the technical field. The terms used in embodiments of this application are merely intended to describe objectives of embodiments of this application, but are not intended to limit this application.

Before embodiments of this application are further described in detail, a description is made on nouns and terms involved in embodiments of this application, and the nouns and terms involved in embodiments of this application are applicable to the following explanations.
(1) Layout engine: a module responsible for calculating a coordinate position and a width and a height of a node according to a style attribute of the node. The layout engine may determine a position and a size of a user interface (UI) element according to different layout algorithms, helping a developer quickly achieve a complex layout effect. The most common layout algorithms are a flexible layout (Flexbox) and a grid layout (Grid).
(2) Flexible layout (Flexbox): A one-dimensional layout model can provide strong space distribution and alignment capabilities between sub-elements in Flexbox.
(3) Flow layout: In a document stream, inline elements are displayed in an inline direction, where the inline direction is an arrangement direction of words in an inline text. Block elements, for example, paragraphs in a document, are displayed one by one. English is used as an example. Inline elements are displayed sequentially from the left, and block elements are displayed downward from the top and a page moves.
(4) Position layout: This layout manner uses a position attribute, and the position attribute is configured for specifying a positioning manner of one element in a document. The position attribute may include top, right, bottom, and left attributes, and is configured for determining a final position of the element.
(5) Document object model (DOM) node tree: is a collective name of a set of objects and functions that are specially for operating web page content. A web page may be represented in a form of a node tree like an HTML DOM node tree. The HTML DOM node tree is of a tree structure in a hypertext markup language (HTML) document format, and is configured for representing a hierarchical structure of all elements in a web page document. Each HTML tag, text node, and attribute each is represented as a node in a DOM node tree, each is an object, and can be accessed and operated by using a program language JavaScript or another scripting language. The DOM node tree represents a structure of a web page from a root node of the web page downward in a level-by-level manner. The root node corresponds to a <!DOC TYPE html> tag, followed by an <html> tag, next a <head> tag and a <body> tag, then some tags, and finally a text node in an HTML document. These nodes can be mutually included and nested, to form a tree-like structure.
(6) Cascading style sheets (CSS): a computer language configured for presenting a file style like HTML (an application of a standard generalized markup language) or XML (a subset of the standard generalized markup language). The CSS not only can statically decorate a web page, but also can cooperate with various scripting languages to dynamically format elements in the web page.

In the related technology, common layout engines include a yoga layout engine and a stretch layout engine, can be used on a plurality of platforms including platforms such as an Apple operating system (iOS), an Android system, and Web, and support a flexible layout manner. The yoga layout engine tends to be more aggressively optimized, to pursue a faster speed. The stretch layout engine tends to be aligned with web specifications, and characteristics are better aligned. However, the foregoing two layout engines only support a flexible layout, and when a flexible layout effect is achieved, used flexbox algorithms are basically the same, and a recursive function is performed a large quantity of times. This prolongs page generation time, resulting in low page generation efficiency.

Based on problems existing in the related technology, embodiments of this application provide a high-performance cross-platform layout engine (float-pigment-layout) with more layout styles and closer to web specifications, which not only supports a flexible layout and multi-platform use, but also has a high layout speed and a high alignment degree with the web specifications. In addition, the float-pigment-layout layout engine provided in embodiments of this application may further support a flow layout and a position layout. Because the flow layout is a default value of a web layout, the float-pigment-layout layout engine provided in embodiments of this application has a better support for web. This better conforms to use habits of common programmers, and performance of the float-pigment-layout layout engine is also better.

The float-pigment-layout layout engine provided in embodiments of this application may support a page generation method. In the page generation method, during page generation, a to-be-laid out page is first converted into a node tree. When a flexible layout is used, a parameter mapping table may be obtained. After a main axis size of the node is determined based on a style attribute of the node, a secondary axis size of the node is determined based on the main axis size of the node and the parameter mapping table. Then, main axis coordinates and secondary axis coordinates of the node are determined based on the secondary axis size and the main axis size. The to-be-laid out page is generated according to the main axis size, the secondary axis size, the main axis coordinates, and the secondary axis coordinates of each node. Compared with the foregoing layout engines in the related technology, in the page generation method provided in embodiments of this application, a corresponding size value may be directly obtained from the parameter mapping table based on the main axis size of the node, and is used as the secondary axis size of the node, thereby saving calculation time. In addition, when the page is updated and positions of all nodes need to be recalculated, the size value in the parameter mapping table may also be directly used, thereby shortening time required for the page generation, and improving page generation and page rendering efficiency.

Herein, an exemplary application of a page generation device provided in embodiments of this application is first described. The page generation device is an electronic device configured to implement the page generation method. In an implementation, the page generation device (namely, the electronic device) provided in embodiments of this application may be implemented as a terminal, or may be implemented as a server. In an implementation, the page generation device provided in embodiments of this application may be implemented as various types of user terminals such as a notebook computer, a tablet computer, a desktop computer, a set-top box, a mobile device (for example, a mobile phone, a portable music player, a personal digital assistant, a dedicated message device, or a portable game device), a smartphone, a smart speaker, a smartwatch, a smart television, and an in-vehicle terminal. In another implementation, the page generation device provided in embodiments of this application may alternatively be implemented as a server. The server may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal and the server may be directly or indirectly connected in a wired or wireless communication manner. This is not limited in embodiments of this application. An exemplary application when the page generation device is implemented as the server is described below.

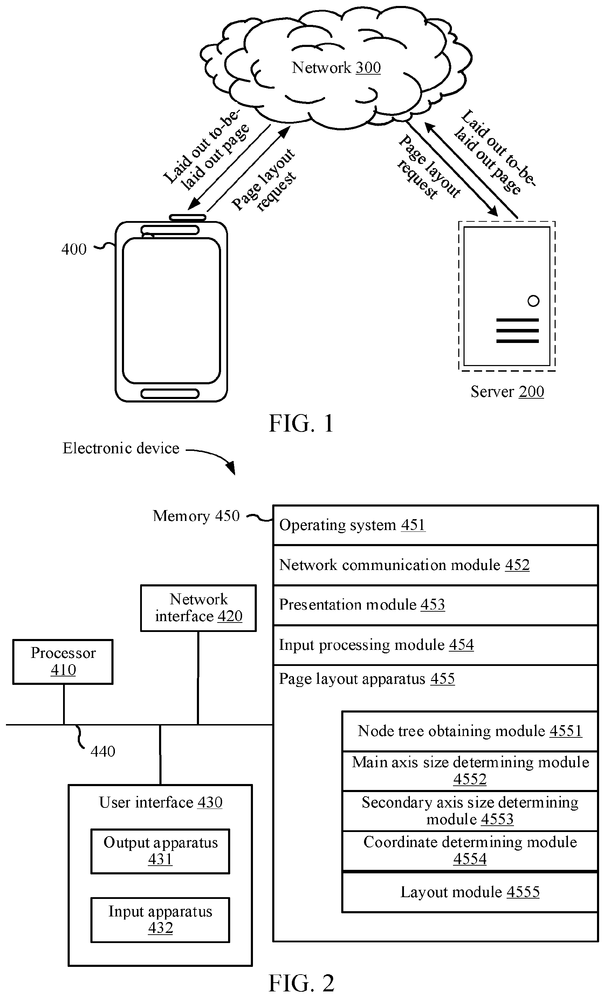

FIG. 1 is an optional schematic architectural diagram of a page generation system according to an embodiment of this application. To implement page generation, a page generation application (a float-pigment-layout layout engine) may be provided. The page generation system provided in this embodiment of this application includes at least a terminal 400, a network 300, and a server 200. The page generation application runs on the terminal 400. The server 200 is a background server of the page generation application. The server 200 may constitute the page generation device in embodiments of this application. That is, the page generation method in embodiments of this application is implemented via the server 200. The terminal 400 is connected to the server 200 through the network 300. The network 300 may be a wide area network, a local area network, or a combination thereof.

Refer to FIG. 1. When a to-be-laid out page is laid out, a user may perform an interactive operation on a client of the page generation application via the terminal 400. The interactive operation may be a style attribute editing operation, a clicking operation, or the like. After receiving the interactive operation of the operator, the client may send a page generation request to the server 200 via the terminal 400. When receiving the page generation request, the server 200 obtains a node tree, the node tree including a plurality of nodes for representing content in a to-be-laid out page; obtains a style attribute of a node (which may be referred to as a target node or first node) from the plurality of nodes, a parent node of the node using a flexible layout, and determines a main axis size of the node based on the style attribute of the node, the style attribute including at least a node size limit attribute; when the node includes at least one child node, obtains a parameter mapping table, and obtains a secondary axis size of the node based on the main axis size of the node and the parameter mapping table, the parameter mapping table including a mapping relationship between the style attribute and a size value; determines main axis coordinates and secondary axis coordinates of each node based on the main axis size and the secondary axis size of each node; and generates the to-be-laid out page according to the main axis size, the secondary axis size, the main axis coordinates, and the secondary axis coordinates of each node. Finally, the server 200 may send the laid out to-be-laid out page to the terminal 400, so that the terminal 400 displays the laid out to-be-laid out page to the user.

In some embodiments, the terminal 400 may alternatively perform the page generation method in embodiments of this application. To be specific, after the terminal 400 receives an interactive operation inputted by a user via a client, the terminal 400 obtains, in response to the interactive operation of the user, a node tree; obtains a style attribute of a node (which may be referred to as a target node or a first node) from the plurality of nodes, a parent node of the node using a flexible layout, and determines a main axis size of the node based on the style attribute of the node; when the node includes at least one child node, obtains a parameter mapping table, and obtains a secondary axis size of the node based on the main axis size of the node and the parameter mapping table; determines main axis coordinates and secondary axis coordinates of each node based on the main axis size and the secondary axis size of each node; and generates the to-be-laid out page according to the main axis size, the secondary axis size, the main axis coordinates, and the secondary axis coordinates of each node. The terminal 400 may display the laid out to-be-laid out page to the user.

The page generation method provided in embodiments of this application may be further implemented based on a cloud platform and by using a cloud technology. For example, the server 200 may be a cloud server. The cloud server obtains a node tree; obtains a style attribute of a node (which may be referred to as a target node or first node) from the plurality of nodes, a parent node of the node using a flexible layout, and determines a main axis size of the node based on the style attribute of the node; when the node includes at least one child node, obtains a parameter mapping table, and obtains a secondary axis size of the node based on the main axis size of the node and the parameter mapping table; determines main axis coordinates and secondary axis coordinates of each node based on the main axis size and the secondary axis size of each node; and generates the to-be-laid out page according to the main axis size, the secondary axis size, the main axis coordinates, and the secondary axis coordinates of each node.

In some embodiments, there may be further a cloud memory, and the node tree, the parameter mapping table, and the like may be stored in the cloud memory. In this way, when receiving a page generation request, the cloud server may directly obtain the secondary axis size of the node from the cloud memory based on the parameter mapping table and the main axis size of the node, so that a page layout speed is improved.

The cloud technology is a hosting technology that unifies a series of resources such as hardware, software, and networks in a wide area network or a local area network to implement computing, storage, processing, and sharing of data. The cloud technology, a collective name for a network technology, information technology, integration technology, management platform technology, and application technology that are applied based on a business mode of cloud computing, can form a resource pool and can be used on demand, which is flexible and convenient. The cloud computing technology becomes an important support. A background service of a technical network system requires a large amount of computing and storage resources, such as video websites, image websites, and more portal websites. With the high development and application of the Internet industry, each item may have its own identifier in the future and needs to be transmitted to a background system for logical processing. Data at different levels is separately processed, and data in various industries requires strong system support and this can only be implemented through cloud computing.

FIG. 2 is a schematic structural diagram of an electronic device according to an embodiment of this application. The electronic device shown in FIG. 2 may be a page generation device. The page generation device includes: at least one processor 410, a memory 450, at least one network interface 420, and a user interface 430. The components in the page generation device are coupled by using a bus system 440. The bus system 440 is configured to implement connection and communication between the components. In addition to a data bus, the bus system 440 further includes a power bus, a control bus, and a status signal bus. However, for ease of clear description, all types of buses in FIG. 2 are marked as the bus system 440.

The processor 410 may be an integrated circuit chip having a signal processing capability, for example, a general purpose processor, a digital signal processor (DSP), or another programmable logic device, a discrete gate or a transistor logical device, or a discrete hardware component. The general purpose processor may be a microprocessor, any conventional processor, or the like.

The user interface 430 includes one or more output apparatuses 431 that can show medium content, including one or more speakers and/or one or more visual display screens. The user interface 430 further includes one or more input apparatuses 432, including user interface components that facilitate user input, such as a keyboard, a mouse, a microphone, a touchscreen, a camera, and other input buttons and controls.

The memory 450 may be removable, irremovable or a combination thereof. The exemplary hardware device includes a solid-state memory, a hard disk drive, an optical disk drive, and the like. The memory 450 alternatively includes one or more storage devices physically far away from the processor 410.

The memory 450 includes a volatile memory or a non-volatile memory, or may include both a volatile memory and a non-volatile memory. The non-volatile memory may be a read-only memory (ROM), and the volatile memory may be a random access memory (RAM). The memory 450 described in this embodiment of this application aims to include any suitable type of memory.

In some embodiments, the memory 450 can store data to support various operations. Examples of the data include a program, a module, a data structure, or a subset or a superset thereof, which are described below by way of example.

An operating system 451 includes a system program like a framework layer, a kernel library layer, and a driver layer configured to process various basic system services and execute hardware-related tasks, and is configured to: implement various fundamental services and process hardware-based tasks. A network communication module 452 is configured to reach another electronic device through one or more (wired or wireless) network interfaces 420. Exemplary network interfaces 420 include: Bluetooth, wireless fidelity authentication (Wi-Fi), a universal serial bus (USB), and the like. A presentation module 453 is configured to enable presentation of information (for example, a user interface configured to: operate a peripheral device and display content and information) through the one or more output apparatuses 431 (for example, a display screen and a speaker) associated with the user interface 430. An input processing module 454 is configured to: detect one or more user inputs or interactions from one of the one or more input apparatuses 432, and translate the detected inputs or interactions.

In some embodiments, the apparatus provided in this embodiment of this application may be implemented in a software manner. FIG. 2 shows a page generation apparatus 455 stored in the memory 450. The page generation apparatus 455 may be software in a form of a program, a plug-in, and the like, and includes the following software modules: a node tree obtaining module 4551, a main axis size determining module 4552, a secondary axis size determining module 4553, a coordinate determining module 4554, and a layout module 4555. These modules are logical, and therefore may be randomly combined or further divided according to an implemented function. Functions of the modules are described below.

The page generation method provided in embodiments of this application may be performed by an electronic device. The electronic device may be a server, or may be a terminal. That is, the page generation method in embodiments of this application may be performed by a server, or may be performed by a terminal, or may be performed through interaction between a server and a terminal.

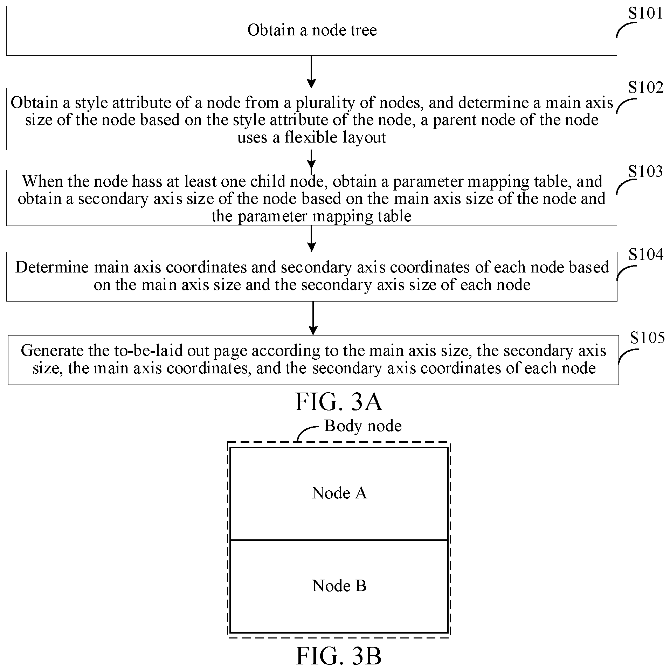

FIG. 3A is an optional schematic flowchart of a page generation method according to an embodiment of this application. The following provides descriptions with reference to operations shown in FIG. 3A. As shown in FIG. 3A, an example in which the page generation method is performed by a server is configured for description. The method includes the following operation S101 to operation S105.

Operation S101: Obtain a node tree, the node tree including a plurality of nodes for representing content in a to-be-laid out page.

Herein, the to-be-laid out page may be a web page, or may be a page of an application program, for example, a page of a mini program. All content in the to-be-laid out page may be represented by the nodes in the node tree. The content in the to-be-laid out page includes an element, an attribute, a text, and the like. Correspondingly, the nodes in the node tree may include an element node, an attribute node, and a text node. There is a hierarchical relationship between the nodes in the node tree. The plurality of nodes of the node tree include a root node, at least one parent node, and at least one child node. The parent node has a child node, and a child node on a same level is referred to as a brother node. In the node tree, a node at the top becomes a root node, each node except the root node has a parent node, a node may have any quantity of child nodes, and a leaf node is a node having no child nodes. For a node, a child node of the node is a first layer of child node owned by the node in the node tree, and a grandchild node is a second layer of child node owned by the node in the node tree. FIG. 3B is a schematic diagram of effects of a parent node and a child node on a page. Refer to FIG. 3B. A body node is a parent node, and a node A and a node B are both child nodes of the body node.

For example, a web page may be represented in a form of an HTML DOM node tree. A process of creating an HTML DOM node tree is as follows: After content in a web page is read, a unique root node document is created in a memory; and the content in the web page is scanned, and each time a piece of content (an element, a text, an attribute, or the like) is scanned, a new node is automatically created, and an attribute and a value of the current piece of content are stored in the node. Then, the newly created node is stored at a corresponding position in the HTML DOM node tree, to obtain the HTML DOM node tree corresponding to the web page.

Operation S102: Obtain a style attribute of a node (which may be referred to as a target node or first node) from the plurality of nodes, a parent node of the node using a flexible layout, and determine a main axis size of the node based on the style attribute of the node.

The style attribute includes at least a node size limit attribute.

Herein, when a node is set to the flexible layout, all child nodes of the node use the flexible layout. For example, a body node is a parent node, and a node A and a node B are both child nodes of the body node. When the body node is set to display: flex (flexible layout), the node A and the node B both use the flexible layout. In a flexible layout of a node, a main axis is an axis along which child nodes are stacked in the node. When an attribute value of a main axis direction attribute (flex-direction) of the node is a row, the main axis is in a horizontal direction; or when an attribute value of a flex-direction attribute is a column, the main axis is in a vertical direction. A secondary axis is an axis perpendicular to the main axis, and is also referred to as a cross axis. A main axis direction is a direction along which child nodes are stacked. By default, a main axis horizontal direction is from left to right, and a main axis vertical direction is from up to down. The main axis direction may be reversed by changing a *-reverse setting and a direction attribute setting in the flex-direction attribute. When a word-wrap attribute (a flex-wrap attribute) of the node is set to wrap or wrap-reverse, the child nodes of the node may be laid out on a plurality of rows, and a secondary axis direction is an extension direction of the plurality of rows.

In this embodiment of this application, the style attribute of the node may include a node size limit attribute (requestSize). The node size limit attribute may further include a main axis size limit attribute and a secondary axis size limit attribute. When a developer does not set the main axis size limit attribute, an attribute value of the main axis size limit attribute is a default value, and the default value of the main axis size limit attribute is infinite (INF). When the secondary axis size limit attribute is not set, an attribute value of the secondary axis size limit attribute is also a default value, and the default value of the secondary axis size limit attribute is infinite (INF). For any node using the flexible layout, after a style attribute of the node is obtained, an initial size of the node may be first determined based on the style attribute. Then, a main axis size of the node may be determined according to an attribute value of a main axis size limit attribute of a parent node of the node, namely, a main axis limit size, and initial sizes of the node and a brother node of the node. The initial size of the node is a preset size on a main axis when being not affected by another node. The style attribute may further include a text width limit attribute.

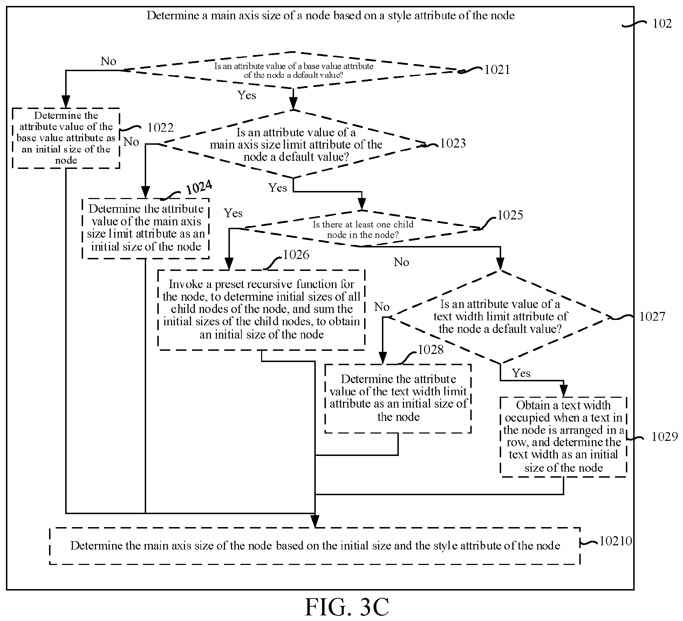

In some embodiments, in operation S102, "determine a main axis size of the node based on the style attribute of the node" may be implemented through operations shown in FIG. 3C, and descriptions are provided below with reference to FIG. 3C.

Operation 1021: Determine whether an attribute value of a base value attribute of the node is a default value.

Herein, the base value attribute is a flex-basis attribute in the flexible layout. For any node using the flexible layout, when the developer has set a base value attribute of the node, an attribute value of the base value attribute is not a default value, and operation 1022 is performed; or when the developer does not set a base value attribute, an attribute value of the base value attribute is a default value, and the default value of the base value attribute may be auto, and operation 1023 is performed.

Operation 1022: Determine the attribute value of the base value attribute as an initial size of the node, and perform operation 10210.

In some embodiments, when the attribute value of the base value attribute is not the default value, the attribute value of the base value attribute is directly used as the initial size of the node. For example, if a node A is a child node of a body node, and an attribute value of a flex-basis attribute in a style attribute of the node A is 100 px, an initial size of the node A is 100 px (pixel, pixel unit).

Operation 1023: Determine whether the attribute value of the main axis size limit attribute of the node is the default value.

When the attribute value of the main axis size limit attribute of the node is not the default value, operation 1024 is performed; or when the attribute value of the main axis size limit attribute of the node is the default value, operation 1025 is performed.

Operation 1024: Determine the attribute value of the main axis size limit attribute as an initial size of the node, and perform operation 10210.

In some embodiments, for any node using the flexible layout, when the developer has set a main axis size limit attribute in a node size limit attribute of the node, an attribute value of the main axis size limit attribute is not a default value, and the attribute value is a main axis limit size. If an attribute value of a secondary axis size limit attribute is not set, the attribute value of the secondary axis size limit attribute is INF. The main axis limit size of the node may be obtained, and the main axis limit size is directly used as an initial size of the node. For example, if a node A is a child node of a body node, and an attribute value of a requestSize attribute in a style attribute of the node A is (100 px, INF), a main axis limit size of the node A is 100 px. In this case, an initial size of the node A is 100 px (pixel, pixel unit).

For a parent node using the flexible layout, after an initial size of each child node of the parent node is obtained, a main axis size of each child node may be determined according to a main axis limit size (namely, an attribute value of a main axis size limit attribute) of the parent node and the initial size of each child node.

In this embodiment of this application, style attribute setting conditions of the node are distinguished, to obtain the initial size of the node in different manners, so that the main axis size is determined based on the initial size, thereby improving a page generation speed, and improving a page effect after each node is laid out.

Operation 1025: Determine whether there is at least one child node in the node.

When there is the at least one child node in the node, operation 1026 is performed; or when there is no child node in the node, operation 1027 is performed.

Operation 1026: Invoke a preset recursive function for the node, to determine initial sizes of all child nodes of the node, sum the initial sizes of the child nodes, to obtain an initial size of the node, and perform operation 10210.

In this embodiment of this application, for any node using the flexible layout, when the developer does not set a base value attribute and a node size limit attribute of the node, attribute values of the base value attribute and the node size limit attribute are both default values, the default value of the base value attribute is auto, and the default value of the node size limit attribute is (INF, INF). In this case, an initial size of the node is a size occupied by the node on a main axis. If the node is a subtree, that is, the node includes at least one child node, a recursive function (compute recursive function) may be invoked for the node, and a returned size value of the recursive function is used as the initial size of the node.

The compute recursive function may include a target node, a node size limit attribute requestSize, a text width limit attribute maxContent, a parent node size parentSize, and a size value Size. The target node is a node whose size needs to be calculated. The node size limit attribute requestSize is a node size limit attribute of the target node, and infinite may be represented by INF. The text width limit attribute maxContent is an additional width limitation for a text segment included in the target node. When reaching an attribute value of maxContent, a text needs to be displayed in a new row. The parent node size parentSize is a size of a parent node of the target node, including a main axis size and a secondary axis size of the parent node. The size value Size is a returned size that is of the target node and that is obtained through calculation of the compute recursive function.

When the recursive function is invoked for a node to determine an initial size of the node, the recursive function is invoked for each child node of the node downward layer by layer in a node tree, until the recursive function is invoked for all leaf nodes in the node. A lowest layer of leaf node is a text node, and includes a segment of text. After the recursive function is invoked for the leaf node, a returned size value of the recursive function is a width occupied by the text on a main axis, that is, an initial size of the leaf node. After the initial size of the leaf node is determined, the initial size is returned to a parent node on an upper layer of the leaf node in the node tree, so that the recursive function for the parent node starts to perform a calculation process, and an initial size of the parent node is obtained based on initial sizes of the leaf nodes. The size value is sequentially returned in the node tree upward layer by layer for recursion until the initial size of the node is obtained. Therefore, after the preset recursive function is invoked for a node, initial sizes returned for all child nodes of the node may be obtained. The initial sizes returned for all the child nodes of the node are summed, and an obtained sum is an initial size of the node.

In the foregoing process of invoking the recursive function, when the recursive function is invoked for each layer of a child node to determine a size value, whether attribute values of attributes such as a base value attribute and a node size limit attribute in a style attribute of the child node are default values. If the attribute values are not the default values, reference may be made to execution operations in the foregoing other embodiments.

In another embodiment, the pre-constructed parameter mapping table may be obtained, and the parameter mapping table includes a mapping relationship between the style attribute and the size value. In some embodiments, the parameter mapping table may include a mapping relationship between the node size limit attribute, the text width limit attribute, and the size value. After the recursive function is invoked for the node, a calculation process of the recursive function may be omitted, a corresponding target size value is directly determined from the parameter mapping table based on the style attribute of the node, and the target size value is used as the initial size of the node. For example, the recursive function is invoked for a node A, an attribute value of a node size limit attribute of the node A is (INF, INF), child nodes of the node A are a node C and a node D, both the node C and the node D are leaf nodes, an attribute value of a node size limit attribute of the node C is (INF, INF), an attribute value of a text width limit attribute is 100 px, and an attribute value of a node size limit attribute of the node D is (50 px, INF). In this case, for the node C, a target size value of 100 px corresponding to the attribute value of (INF, INF) of the node size limit attribute, and the attribute value of 100 px of the text width limit attribute is directly obtained from the parameter mapping table, and is used as an initial size of the node C; and for the node D, a target size value of 50 px corresponding to an attribute value (50 px, INF) of the node size limit attribute is directly obtained from the parameter mapping table, and is used as an initial size of the node D. The initial sizes of the nodes C and D are returned to the node A, and a calculation process of the recursive function for the node A is performed, to obtain a size value of 150 px as an assumed size of the node A. In this embodiment of this application, the calculation process of the recursive function may be omitted via the parameter mapping table, so that calculation time is saved, thereby improving a page generation speed.

In an embodiment, if a node has only one child node, an initial size of the child node may be directly used as an initial size of the node.

For a parent node using the flexible layout, after an initial size of each child node of the parent node is obtained, a main axis size of each child node may be determined according to a main axis limit size of the parent node and the initial size of each child node.

In this embodiment of this application, a main axis size of each node may be obtained by invoking the recursive function, to complete page generation.

Operation 1027: Determine whether an attribute value of the text width limit attribute of the node is a default value.

When the attribute value of the text width limit attribute of the node is not the default value, operation 1028 is performed; or when the attribute value of the text width limit attribute of the node is the default value, operation 1029 is performed.

Operation 1028: Determine the attribute value of the text width limit attribute as an initial size of the node, and perform operation 10210.

Herein, the text width limit attribute maxContent is an additional width limitation for a text segment included in the node. When reaching an attribute value of maxContent, a text needs to be displayed in a new row. For any node using the flexible layout, when the developer does not set a base value attribute and a node size limit attribute of the node, attribute values of the base value attribute and the node size limit attribute are default values. In this case, an initial size of the node is a size occupied by the node on a main axis. If the node does not include a child node in a node tree, the node is a leaf node, the leaf node is a text node, and the text node includes a segment of text. When the developer has set a text width limit attribute of the leaf node, an attribute value of the text width limit attribute is not a default value, and the attribute value of the text width limit attribute may be directly determined as an initial size of the leaf node.

Operation 1029: Obtain a text width occupied when a text in the node is arranged in a row, determine the text width as an initial size of the node, and perform operation 10210.

In some embodiments, when the developer does not set a text width limit attribute of the leaf node, an attribute value of the text width limit attribute of the leaf node is a default value, a text width occupied when a text in the leaf node is arranged in a row may be directly obtained based on attributes such as a font size and a word spacing in a style attribute of the leaf node, and the text width is determined as an initial size of the leaf node.

Alternatively, after the initial size of the node is obtained, the main axis size of the node may be determined according to the main axis limit size of the parent node of the node and the initial sizes of the node and the brother node of the node.

In this embodiment of this application, text width limit attribute setting conditions of the node are distinguished, to obtain the initial size of the leaf node in different manners, so that the main axis size is determined based on the initial size, thereby improving a page generation speed, and improving a page effect after each node is laid out.

Operation 10210: Determine the main axis size of the node based on the initial size and the style attribute of the node.

In some embodiments, operation 10210 may be implemented in the following manner: summing initial sizes of all child nodes of the parent node of the node, to obtain a sum of the initial sizes; and when the sum of the initial sizes is less than an attribute value of a main axis size limit attribute of the parent node, if an attribute value of a flexible growth attribute of the node is greater than 0, extending the initial size of the node based on the attribute value of the flexible growth attribute, to obtain the main axis size of the node; or when the sum of the initial sizes is less than an attribute value of a main axis size limit attribute of the parent node, if an attribute value of a flexible shrink attribute of the node is greater than 0, compressing the initial size of the node based on the attribute value of the flexible shrink attribute, to obtain the main axis size of the node.

Herein, after the initial size of each node is obtained, for any node, if an attribute value of a main axis size limit attribute of a parent node of the node is not a default value, initial sizes of all child nodes of the parent node may be first summed. That is, an initial size of the node and an initial size of each brother node of the node are added, to obtain a sum of the initial sizes.

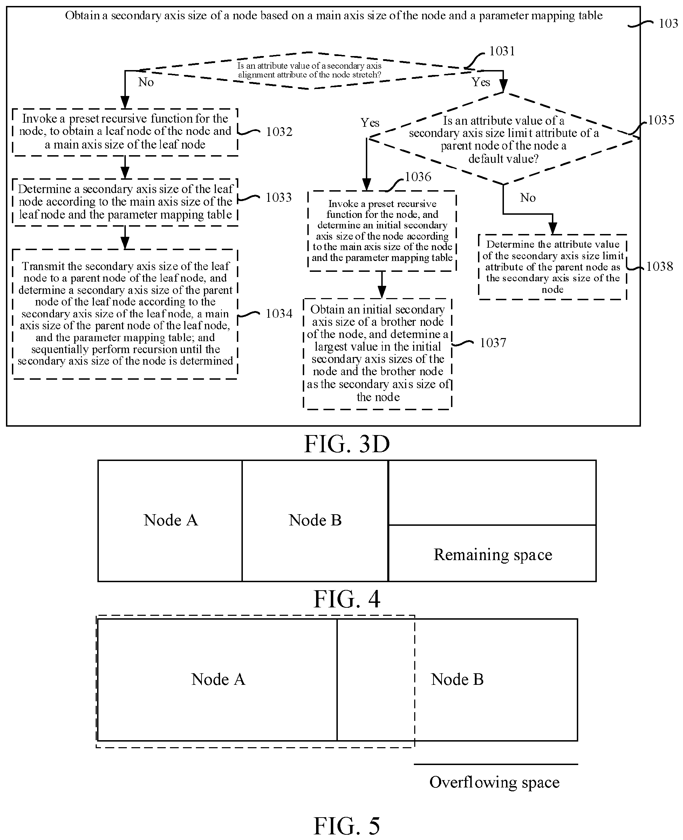

If the sum of the initial sizes is less than the main axis limit size of the parent node, there is remaining space on the main axis of the parent node. For example, FIG. 4 is a schematic diagram in which nodes do not fully occupy a main axis. As shown in FIG. 4, a node A and a node B are child nodes of a body node. A sum of an initial size of the node A and an initial size of the node B is less than a main axis limit size of the body node. In this case, there is remaining space. Attribute values of flexible growth attributes (flex-grow) of the node and each brother node may be obtained. For any node, a value interval of a flexible growth attribute of the node is (0, 1), and a default value is 0. That is, the node cannot be extended by default. A child node whose attribute value of a flexible growth attribute on a main axis is greater than 0 may be extended, and occupies the remaining space on the main axis. The initial size of the node may be extended based on the attribute value of the flexible growth attribute, to obtain a main axis size of the node. In this embodiment of this application, an implementation operation of extending the initial size of the node based on the attribute value of the flexible growth attribute is not limited. In an actual algorithm, this may further be affected by various other style attributes, provided that remaining space occupied by the node after the extension is directly proportional to the attribute value of the flexible growth attribute.

If a sum of the initial sizes is greater than a main axis limit size of a parent node, a main axis of the parent node is already fully occupied and overflows, where an overflowing part is recorded as overflowing space. For example, FIG. 5 is a schematic diagram in which nodes extend beyond a main axis. Refer to FIG. 5, a node A and a node B are child nodes of a body node. A sum of an initial size of the node A and an initial size of the node B is greater than a main axis limit size of the body node. In this case, there is overflowing space. Attribute values of flexible shrink attributes (flex-shrink) of the node and each brother node may be obtained. For any node, a value interval of a flexible shrink attribute of the node is (0, 1), and a default value is 1. That is, the node can be compressed by default. A child node whose attribute value of a flexible shrink attribute on a main axis of a parent node is greater than 0 may be compressed, so that overflowing space on the main axis finally becomes 0. The initial size of the node may be compressed based on the attribute value of the flexible shrink attribute, to obtain a main axis size of the node. In this embodiment of this application, an implementation operation of compressing the initial size of the node based on the attribute value of the flexible shrink attribute is not limited. In an actual algorithm, this may further be affected by various other style attributes, provided that compressed space of the node is directly proportional to a product of the attribute value of the flexible shrink attribute and the initial size.

In this embodiment of this application, whether there is remaining space or overflowing space on the main axis of the parent node is determined according to a main axis size limit attribute of the parent node and an initial size of each child node, to extend or compress a corresponding child node based on the flexible growth attribute or the flexible shrink attribute, to obtain a main axis size of each child node, thereby improving a page display effect after each node is laid out.

Operation S103: When the node includes the at least one child node, obtain the parameter mapping table, and obtain a secondary axis size of the node based on the main axis size of the node and the parameter mapping table.

The parameter mapping table includes the mapping relationship between the style attribute and the size value.

Herein, after the main axis size of the node is determined, the secondary axis size may be determined based on the main axis size. For example, for a proportionally scaled image, a size in one direction is determined, and a size in another direction may also be determined accordingly. The pre-constructed parameter mapping table may include the mapping relationship between the style attribute and the size value. In some embodiments, the parameter mapping table may include a mapping relationship between the node size limit attribute, the text width limit attribute, and the size value. A calculation process of calculating the secondary axis size based on the main axis size may be omitted via the parameter mapping table. For any node, a main axis size of the node corresponds to the main axis limit size of the node size limit attribute in the parameter mapping table. A corresponding target size value may be directly determined from the parameter mapping table based on the main axis size of the node, and the target size value is used as a secondary axis size of the node. When attribute values of attributes such as a margin and padding in the style attribute are in a percentage form, the style attribute in the parameter mapping table may further include a parent node size parentSize.

In some embodiments, the style attribute includes a secondary axis alignment attribute. "Obtain a secondary axis size of the node based on the main axis size of the node and the parameter mapping table" in operation S103 may be implemented through operations shown in FIG. 3D. Descriptions are provided below with reference to FIG. 3D.

Operation 1031: Determine whether an attribute value of the secondary axis alignment attribute of the node is stretch.

When the attribute value of the secondary axis alignment attribute of the node is not stretch, operation 1032 is performed; or when the attribute value of the secondary axis alignment attribute of the node is stretch, operation 1035 is performed.

Operation 1032: Invoke the preset recursive function for the node, to obtain a leaf node of the node and a main axis size of the leaf node.

Operation 1033: Determine a secondary axis size of the leaf node according to the main axis size of the leaf node and the parameter mapping table.

Operation 1034: Transmit the secondary axis size of the leaf node to a parent node of the leaf node, and determine a secondary axis size of the parent node of the leaf node according to the secondary axis size of the leaf node, a main axis size of the parent node of the leaf node, and the parameter mapping table; and sequentially perform recursion until the secondary axis size of the node is determined.

Herein, the secondary axis alignment attribute (align-self) is configured for aligning nodes in a secondary axis direction. When the attribute value of the secondary axis alignment attribute of the node is not stretch, the recursive function may be directly invoked for the node. In this case, a value of requestSize in the recursive function is the main axis size of the node, so that the recursive function is invoked for each child node of the node downward layer by layer in the node tree, until the recursive function is invoked for all the leaf nodes in the node, to determine a secondary axis size of each node. In a process of invoking the recursive function to determine the secondary axis size, the parameter mapping table may be configured for replacing the calculation process of the recursive function.

In this embodiment of this application, in a process of determining the secondary axis size of the node, after the preset recursive function is invoked for a node, at least one leaf node of the node in the node tree may be obtained. The main axis size of each node in the node tree has been obtained through calculation in the foregoing operations. Therefore, a main axis size of each leaf node may be directly obtained. For any leaf node, a secondary axis size of the leaf node may be determined from the parameter mapping table based on a main axis size of the leaf node. After the secondary axis size of each leaf node is obtained, for any leaf node, a secondary axis size of the leaf node may be returned to a parent node on an upper layer of the leaf node in the node tree, and a secondary axis size of the parent node is determined according to the secondary axis size of the leaf node, a main axis size of the parent node, and the parameter mapping table.

For example, a target style attribute may be determined from the parameter mapping table based on the main axis size of the parent node. An attribute value of a main axis size limit attribute in the target style attribute is equal to the main axis size of the parent node. Then, a target size value corresponding to the target style attribute is obtained from the parameter mapping table. The target size value may be compared with the secondary axis size of the leaf node. If the target size value is greater than or equal to the secondary axis size of the leaf node, the target size value is determined as the secondary axis size of the parent node; or if the target size value is less than the secondary axis size of the leaf node, the secondary axis size of the leaf node is determined as the secondary axis size of the parent node. During actual calculation, the secondary axis size may further be affected by another style attribute like a word-wrap attribute (flex-wrap), which may cause child nodes in the parent node to be displayed in a plurality of rows in the secondary axis direction. In this case, secondary axis sizes of the child nodes further affect the secondary axis size of the parent node. Reference may be made to a calculation method in the related technology. This is not limited in embodiments of this application herein.

According to the foregoing operation of obtaining the secondary axis size, recursion is sequentially performed from the leaf nodes upward layer by layer in the node tree, until a secondary axis size of each node is obtained based on the parameter mapping table.

In this embodiment of this application, the parameter mapping table is configured for replacing the internal calculation process of the recursive function, thereby saving calculation time, and improving a page generation speed and page rendering efficiency.

In some embodiments, in the foregoing operation, the determining a secondary axis size of the leaf node according to the main axis size of the leaf node and the parameter mapping table may be implemented in the following manner: determining a target style attribute from the parameter mapping table, an attribute value of the main axis size limit attribute in the target style attribute being equal to the main axis size of the leaf node; and determining, from the parameter mapping table, a target size value corresponding to the target style attribute, and determining the target size value as the secondary axis size of the leaf node.

In this embodiment of this application, the target style attribute may be determined from the parameter mapping table based on the main axis size of the leaf node. The attribute value of the main axis limit size of the main axis size limit attribute in the target style attribute is equal to the main axis size of the leaf node. Then, the target size value corresponding to the target style attribute is obtained from the parameter mapping table. The target size value is used as the secondary axis size of the leaf node.

In this embodiment of this application, the parameter mapping table is configured for replacing the internal calculation process of the recursive function, thereby saving calculation time, and improving a page generation speed and page rendering efficiency.

Operation S1035: Determine whether an attribute value of a secondary axis size limit attribute of a parent node of the node is a default value.

When the attribute value of the secondary axis size limit attribute of the parent node of the node is the default value, operation 1036 is performed; or when the attribute value of the secondary axis size limit attribute of the parent node of the node is not the default value, operation 1038 is performed.

Operation 1036: Invoke the preset recursive function for the node, and determine an initial secondary axis size of the node according to the main axis size of the node and the parameter mapping table.

Operation 1037: Obtain an initial secondary axis size of the brother node of the node; and determine a largest value in the initial secondary axis sizes of the node and the brother node as the secondary axis size of the node.

Herein, when the attribute value of the secondary axis alignment attribute of the node is stretch, if the attribute value of the secondary axis size limit attribute of the parent node of the node is not the default value, the node needs to be stretched in the secondary axis direction to fill the secondary axis of the parent node. Therefore, the attribute value of the secondary axis size limit attribute of the parent node may be obtained, the attribute value of the secondary axis size limit attribute is used as the secondary axis size of the parent node, and then the secondary axis size of the parent node is determined as the secondary axis size of the node.

In this embodiment of this application, when the attribute value of the secondary axis alignment attribute is stretch, the secondary axis size of the parent node is directly determined as the secondary axis size of the node, so that a process of invoking the recursive function once is omitted, thereby reducing a quantity of recursion invocations, saving time required for the page generation, and improving page rendering efficiency.

Operation 1038: Determine the attribute value of the secondary axis size limit attribute of the parent node as the secondary axis size of the node.

In this embodiment of this application, when the attribute value of the secondary axis alignment attribute of the node is stretch, if the attribute value of the secondary axis size limit attribute of the parent node of the node is the default value, the node needs to be stretched in the secondary axis direction to be aligned with a child node having a largest secondary axis size in the parent node. First, the recursive function may be invoked for the node, an initial secondary axis size of the node and an initial secondary axis size of each child node of the node are determined according to the main axis size of the node and the parameter mapping table, and then an initial secondary axis size of each node in the node tree is obtained based on a same method. The foregoing process of determining the initial secondary axis size is similar to the foregoing process of determining the secondary axis size when the attribute value of the secondary axis alignment attribute is not stretch. An initial secondary axis size of the brother node of the node may be obtained, and a largest value in the initial secondary axis sizes of the node and the brother node is determined as the secondary axis size of the node.

In this embodiment of this application, the internal calculation process of the recursive function is omitted via the parameter mapping table, thereby saving time required for the page generation, and improving page rendering efficiency.

Operation S104: Determine main axis coordinates and secondary axis coordinates of each node based on the main axis size and the secondary axis size of each node.

Herein, the main axis direction may be first obtained. For any node, main axis coordinates of the node on the main axis are a sum of main axis sizes of all brother nodes before the node in the main axis direction. During actual calculation, there is further another style attribute like a horizontal layout attribute (justify-content) affecting the main axis coordinates. Reference may be made to the calculation method in the related technology. This is not limited in embodiments of this application herein. For any node, secondary axis coordinates of the node on the secondary axis may be obtained through calculation based on secondary axis sizes of brother nodes of the node. However, this is not limited in embodiments of this application herein. During actual calculation, the secondary axis coordinates are mainly affected by style attributes such as a vertical layout attribute (align-items) and align-self. If the node and the brother nodes thereof occupy a plurality of rows, the secondary axis coordinates may be further affected by a style attribute like a multi-line alignment attribute (align-content). Refer to the calculation method in the related technology.

In some embodiments, the determining main axis coordinates and secondary axis coordinates of each node based on the main axis size and the secondary axis size of each node in operation S104 may be implemented in the following manner: invoking the preset recursive function for each node, and determining a main axis size, a secondary axis size, main axis coordinates, and secondary axis coordinates of each child node of each node based on the main axis size and the secondary axis size of each node.

In this embodiment of this application, for any node, when an attribute value of a secondary axis alignment attribute of the node is stretch, after a secondary axis size of the node is obtained, the preset recursive function further needs to be invoked for the node, so that a child node of the node updates a secondary axis size and secondary axis coordinates of a next layer of child node (namely, a grandchild node of the node). A method for determining a main axis size, the secondary axis size, main axis coordinates, and secondary axis coordinates are similar to that in other embodiments.

Operation S105: Generate the to-be-laid out page according to the main axis size, the secondary axis size, the main axis coordinates, and the secondary axis coordinates of each node.

In this embodiment of this application, after the main axis size, the secondary axis size, the main axis coordinates, and the secondary axis coordinates of each node are obtained, for any node, content of the node may be laid out at a corresponding position on the to-be-laid out page based on the main axis size, the secondary axis size, the main axis coordinates, and the secondary axis coordinates of the node, and a representation form of the content and the like are changed based on the style attribute of the node, to generate a laid out to-be-laid out page.

The node in the node tree may further support a flow layout, a position layout, and the like.

In this embodiment of this application, during the page generation, the to-be-laid out page is first converted into the node tree. When the flexible layout is used, the parameter mapping table may be obtained. After the main axis size of the node is determined based on the style attribute of the node, the secondary axis size of the node is determined based on the main axis size of the node and the parameter mapping table. Then, the main axis coordinates and the secondary axis coordinates of the node are determined based on the secondary axis size and the main axis size. The to-be-laid out page is generated according to the main axis size, the secondary axis size, the main axis coordinates, and the secondary axis coordinates of each node. In this embodiment of this application, because the parameter mapping table includes the mapping relationship between the style attribute and the size value, for each node, the main axis size of the node is used as one item in the style attribute, and the corresponding size value may be directly obtained from the parameter mapping table based on the main axis size of the node, and is used as the secondary axis size of the node, thereby saving calculation time. In addition, when the page is updated and positions of all nodes need to be recalculated, the size value in the parameter mapping table may also be directly used, thereby shortening time required for the page generation, and improving page rendering efficiency.

An exemplary application of embodiments of this application in an actual application scenario is described below.

Embodiments of this application provide a high-performance cross-platform layout engine (float-pigment-layout) with more layout styles and closer to web specifications. The float-pigment-layout layout engine is mainly configured to simulate a layout effect similar to that of a web page in an environment without support of a web browser engine. The float-pigment-layout layout engine may support a flexible layout, that is, an effect of cascading style sheets (CSS) display: flex (flexible layout); an ordinary block layout, that is, an effect of CSS display: block (block-level element layout); a partial inline layout, similar to an effect of CSS display: inline (inline element layout); and absolute positioning, that is, an effect of CSS position: absolute (absolute positioning). The float-pigment-layout layout engine may further support many style settings, such as a maximum size limit and a minimum size limit, padding, and a margin. The float-pigment-layout layout engine provided in embodiments of this application is compiled by using a rust language, and not only can be embedded into desktop and mobile phone native applications, but also supports compilation into a WebAssembly module and is used in a JavaScript environment. The float-pigment-layout layout engine may be applied to typesetting of various applications and game UIs, and may even be used in web, a WeChat mini program, and a mini game environment.

In a process of laying out of a page, the page may usually be represented in a form of a node tree like an HTML DOM node tree. Each node in the node tree has a respective style attribute setting. To present each node on the page, coordinates (x, y) of each node need to be obtained. However, the coordinates are not directly set in the style attribute by a developer, but need to be obtained through deduction according to the style attribute. The following structure of a node tree represented in HTML is used as an example. A body node includes a child node A and a child node B, and a style attribute of the child node A includes height: 100 px (height of 100 px) and background: 048 (background of 048); and a style attribute of the child node B includes height: 50 px and background: 084. If a total page width is 360 px, the layout engine may obtain coordinates and a width and a height of each node according to respective style attribute settings of the child node A and the child node B. The coordinates and the width and the height of each node that are obtained through calculation are shown in Table 1.

**Table 1: Coordinates and width and height of a node**

| Node | Coordinates at an upper left corner of the node | Width and height of the node |
|---|---|---|
| Node A | (0, 0) | (360, 100) |
| Node B | (0, 100) | (360, 50) |
| Body node | (0, 0) | (360, 150) |

That is, the layout engine may obtain a coordinate position and the width and the height of the node through calculation according to the style attribute of the node.

When the flexible layout is performed on a page via the float-pigment-layout layout engine provided in embodiments of this application, a process of laying out the page is a recursive process, and may be represented by a recursive function. The recursive function includes a node (a node whose size needs to be calculated), requestSize (a node size limitation), maxContent (an additional width limitation for a text segment included in the node, where a text needs to wrap when reaching the limitation), parentSize (a parent node size), and Size (a returned node size obtained through calculation).

If a node is set to display: flex, a flexbox algorithm is configured for the node. The naive flexbox algorithm includes the following five operations.

Operation 1: Calculate an assumed size (an initial size) of each child node on a main axis.

For a child node, if an attribute value of a flex-basis attribute of the child node is not a default value, the attribute value of the flex-basis attribute is used as an assumed size of the child node. If no size limitation is imposed on a child node on a main axis, a size occupied by the child node on the main axis is an assumed size. In this case, if the child node is a text node, content of the child node is a segment of text, and the assumed size of the child node is a width occupied when the segment of text is arranged in a row; or if the child node is a subtree, a compute recursive function is invoked for the child node (where requestSize is used as INF), and a size of a function return value of the recursive function in a main axis direction is used as the assumed size.

Operation 2: Calculate a main axis size and a respective size of each child node on the main axis.

After the assumed size of each child node is obtained, if a main axis size limit of the node is not INF, the following two cases may occur. Refer to FIG. 4. If a sum of assumed sizes is less than a main axis size of a node, that is, there is still remaining space on a main axis, a child node whose flex-grow attribute is greater than 0 may be extended and occupy the remaining space on the main axis. Refer to FIG. 5. If a sum of assumed sizes is greater than a main axis size of a node, that is, a main axis is already fully occupied and there is still some overflowing space, a child node whose flex-shrink attribute is greater than 0 needs to be compressed, so that overall occupation does not overflow any more. For a case in which the extension is needed, allocation of the remaining space is directly proportional to a value of flex-grow; and for a case in which the compression is needed, compressed space of the child node is directly proportional to a product of flex-shrink and the assumed size. Actually, a standard algorithm for calculating the extension or the compression may further be affected by other factors or style attributes. Details are not described herein again in embodiments of this application. The flex-grow attribute is 0 by default, and the flex-shrink attribute is 1 by default. That is, a node may be compressed but cannot be extended by default.

Operation 3: Calculate a secondary axis size and a respective size of each child node on a secondary axis.

After the main axis size is determined, the secondary axis size may be determined accordingly. For example, for a proportionally scaled image, a size in one direction is determined, and a size in another direction is determined accordingly. A secondary axis size occupied by each child node may be determined by invoking the compute recursive function (where requestSize carries the main axis size of the child node) for each child node. Particularly, if an align-self attribute is stretch, the secondary axis size of the child node needs to be stretched to a secondary axis size of the node. In this case, the compute recursive function (where requestSize carries the main axis size and the stretched secondary axis size) needs to be additionally invoked once, so that the child node updates a size and position coordinates of a grandchild node in the child node.

Operation 4: Calculate coordinates of each child node on the main axis.

The coordinates of each child node on the main axis are usually a sum of main axis sizes of all brother nodes before the child node. However, some attributes such as a justify-content attribute may affect a final calculation value.

Operation 5: Calculate coordinates of each child node on the secondary axis.

The coordinates of each child node on the secondary axis are mainly affected by the align-items attribute and the align-self attribute. If the child node occupies a plurality of rows, the coordinates of the child node are further affected by the align-content attribute.

The following several aspects may further be affected when the foregoing layout is calculated: a size calculation result needs to be finally limited within attribute ranges of a minimum width (min-width), a maximum width (max-width), a minimum height (min-height), and a maximum height (max-height). The float-pigment-layout layout engine further supports a box-sizing attribute. The box-sizing attribute may affect width and height setting values, and is configured for determining whether a margin, padding, and the like are included in a defined width and height. The style attributes such as the margin and the padding, for example, margin-left, border-top, and padding-bottom also need to be calculated. If attribute values thereof are percentages, the attribute values thereof need to be converted according to the parentSize parameter in the compute recursive function. If the margin is set to auto, there is special logical calculation processing. For example, if a margin of a child node in a secondary axis direction is auto, regardless of attribute values of align-items and align-self, the child node is permanently centered in the secondary axis direction.

Time complexity (where the time complexity is a function, configured for describing running time of the algorithm, expressed by using big O notation) of the foregoing naive flexbox algorithm may be viewed from two perspectives: One perspective is a quantity of times of performing the compute function for a node, and the other perspective is time complexity of the compute function. In the foregoing algorithm operations, in a process of performing the compute function, for each child node, the recursive function is invoked at most three times (one invocation is configured for obtaining the assumed size, and two invocations are configured for calculating the secondary axis size). It is assumed that a node has m child nodes. Although time complexity of the compute function is O (m), because a quantity of times of invoking the compute function for the child node is also O (m), the time complexity of the compute function certainly does not exceed complexity caused by the quantity of times of invoking the compute function. Therefore, this factor does not need to be considered when the time complexity is calculated. In this way, the time complexity of the algorithm is a sum of times of performing the compute recursive functions for all nodes. For any node, it is assumed that a depth of the node in a node tree is d, and a quantity of times of performing the compute function for the node is 3^d.

For a tree having n nodes, if the node tree is a very uniform tree, for example, a completely binary tree, there are approximately n/2 leaf nodes of the node tree, a maximum of d is log(n), and global time complexity is O (n*3^log(n)), is O (n*n^log(3)) after simplification, and is approximately O (n^2.6). If a node tree is a very deep tree, for example, each node has only one child node, there is only one leaf node, a maximum of d is approximately n, and global time complexity is O (3^n). It can be learned that, performance of the foregoing algorithm is poor both from the perspective of average time complexity and poorest time complexity.

The float-pigment-layout layout engine provided in embodiments of this application may support a page generation method. The page generation method may be applied to a page generation scenario of a mini program. According to the page generation method, the foregoing algorithm operations are optimized, and are divided into the following several aspects.

### (1) Recursive invocation pruning

For each node, invocation parameters of the compute recursive function include requestSize, maxContent, and parentSize. In different recursive function invocation processes, parameter values of requestSize, maxContent, and parentSize may be the same. For example, when an assumed size of the node is obtained, sizes of requestSize and maxContent on a main axis are certainly INF, and sizes on a secondary axis may be INF or a specific value. Because a return result of the compute recursive function is only related to the foregoing three parameters, a mapping table (a parameter mapping table) may be configured for caching the return result obtained when compute is invoked with requestSize, maxContent, and parentSize. When the compute recursive function is invoked next time with the same parameters, calculation does not need to be re-performed, and the corresponding return result may be directly obtained from the mapping table. In addition, when percentage values of a margin and padding of the node are not used, the parentSize parameter does not need to be used. Therefore, the mapping table may include only the requestSize and maxContent parameters, to improve a cache hit rate. In addition, these cached returned result values are invalid only after a style attribute of the node changes. Therefore, when a page is updated and positions of all nodes need to be recalculated, these cached return results may further be used again, thereby saving much calculation time.

### (2) Skip a positioning operation

The foregoing five operations of the naive algorithm may include two stages: The first three operations (obtaining the assumed size, calculating the main axis size, and calculating the secondary axis size) are a size calculation stage; and the latter two operations (calculating the main axis coordinates and calculating the secondary axis coordinates) are a coordinate position calculation stage. When a node invokes compute to obtain an assumed size of a child node of the node, only a size of the child node needs to be obtained, and final coordinates of the child node do not need to be calculated. In this case, in the invocation of compute for the child node, only a size calculation stage needs to be completed, and a coordinate position calculation stage may be skipped, to save calculation time. In addition, in three recursive invocations of the compute function for each child node at most, a coordinate position needs to be calculated only in the last invocation of the compute function. Therefore, in the page generation method provided in embodiments of this application, the coordinate position calculation stage for each node needs to be performed only once.

### (3) Reduce a quantity of recursive invocations

When the naive flexbox algorithm is configured for calculating a secondary axis size, the compute recursive function may need to be invoked for a child node at most twice (a former invocation is configured for determining the secondary axis size, and a latter invocation is configured for stretching the secondary axis size during stretch). The page generation method provided in embodiments of this application includes the following three cases: Case 1: When an align-self attribute of a child node is not stretch, the last recursive function invocation is not performed. Case 2: When the align-self attribute of the child node is stretch, and requestSize of the current node is not INF, a secondary axis size of the child node is equal to a secondary axis size of the current node, and the former recursive function invocation is not performed. Case 3: When the align-self attribute of the child node is stretch, and requestSize of the current node is INF, the recursive function is invoked twice.

In the page generation method provided in embodiments of this application, when the secondary axis size is calculated, if only Case 1 and Case 2 are considered, overall average time complexity of the algorithm may be reduced to O (n*2^{log(n)}), namely, O (n²), and poorest time complexity may be reduced to O (2ⁿ). In Case 3, the two recursive invocations are inevitable. The size of the child node is only affected by the latter invocation, but the size of the current node is not affected. If only the size needs to be calculated in compute for the current node, and a coordinate position calculation stage may be skipped, the last invocation may also be skipped. For each node, because the coordinate position calculation stage only needs to be performed once, the last invocation for the child node is also performed at most once. That is, the additional compute invocation brought in Case 3 has time complexity at a level of O (n), and is not a main component of the time complexity. Therefore, according to the page generation method provided in embodiments of this application, the overall time complexity is optimized to be reduced to the average time complexity of O (n²) and the poorest time complexity of O (2ⁿ).

The float-pigment-layout layout engine provided in embodiments of this application may additionally support a box-sizing attribute, further has own features in terms of reducing the quantity of recursive invocations, and is compatible with additional characteristics supported by the float-pigment-layout layout engine. The float-pigment-layout layout engine may further support partial block and inline layouts. For the block layout, generally, a main axis direction is vertical downward, and a secondary axis direction is horizontal to the right. However, the main axis direction and the secondary axis direction may be changed via a writing-mode attribute. Under the block layout, a secondary axis size of a child node is space left by subtracting a margin and padding from a secondary axis size of a current node, that is, the child node fully occupies a secondary axis as much as possible. A size on a main axis is an assumed size of the child node. In some embodiments, the current node needs to separately invoke the compute recursive function for each child node, to obtain an assumed size of each child node on the main axis. The main axis size in requestSize of the compute recursive function is INF, and the secondary axis size is a size obtained by subtracting the corresponding margin and padding on the secondary axis from the secondary axis size of the current node. The assumed size of each child node on the main axis is used as a main axis size of the current node. In the foregoing algorithm, the compute function is invoked for each child node only once, and overall time complexity is O (n). In comparison with the flexbox algorithm, page generation efficiency is improved. In addition, it is required in the web specifications that block margins in the main axis direction overlap with each other to some extent. The float-pigment-layout layout engine may also satisfy the foregoing requirement.

For an inline node in the block layout, the node in the inline layout may be carried under the block layout. All neighboring inline nodes are merged together and are considered as a block node. Effects such as placing a text with different style attributes in a same row or linking images in the text can be achieved. The float-pigment-layout layout engine does not process a problem of how to lay out a plurality of inline nodes in a row, but provides a set of interfaces, and a text typesetter that implements the set of interfaces processes typesetting of the inline nodes. (If not supported by an appropriate text typesetter, the inline nodes may not be supported either.) For example, a rect-palette-text text typesetter may be accessed through an interface, to achieve complex mixing of a text with different attributes and image embedding effects. However, generally, the text typesetter is deeply coupled to a system environment interface, and it is difficult to separate the text typesetter into independent modules. From a perspective of performance, due to a slight increase in calculation complexity, an inline node has a small performance loss relative to a block node, and the performance loss is within 20%.

For a position layout, coordinates of a node may be directly specified. Nodes in another layout manner may be preferentially typeset, and finally, nodes in the position layout are laid out on a page according to specified coordinates.

For a common long list page including a horizontal typesetting element, performance of the float-pigment-layout layout engine provided in embodiments of this application is approximately 1.3 to 3.2 times (depending on an attribute display: flex node percentage) of that of the yoga layout engine in the related technology, as shown in Table 2.

**Table 2: Performance comparison table of different layout engines**

| Flex node percentage | Baseline (yoga) | Float-pigment-layout | Proportion |
|---|---|---|---|
| 50% | ~68 ms | ~53 ms | ~1.3x |
| 37% | ~69 ms | ~46 ms | ~1.5x |
| 25% | ~67 ms | ~40 ms | ~1.7x |
| 12% | ~66 ms | ~27 ms | ~2.4x |
| 0% | ~57 ms | ~18 ms | ~3.2x |

It is considered from an algorithm theoretical analysis that various optimization of each layout engine differs for different node trees. Therefore, an actual optimization effect differs for different node trees.

In this embodiment of this application, related data such as user information is involved. When embodiments of this application are applied to specific products or technologies, user permission or consent needs to be obtained, and collection, use, and processing of relevant data need to comply with relevant laws, regulations, and standards of relevant countries and regions.

An exemplary structure of the page generation apparatus 455 provided in embodiments of this application implemented as a software module is still described below. In some embodiments, as shown in FIG. 2, software modules in the page generation apparatus 455 stored in the memory 450 may include:

a node tree obtaining module 4551, configured to obtain a node tree, the node tree including a plurality of nodes for representing content in the to-be-laid out page; a main axis size determining module 4552, configured to: obtain a style attribute of a node (which may be referred to as a target node or first node) from the plurality of nodes, a parent node of the node using a flexible layout, and determine a main axis size of the node based on the style attribute of the node; a secondary axis size determining module 4553, configured to: when the node includes at least one child node, obtain a parameter mapping table, and obtain a secondary axis size of the node based on the main axis size of the node and the parameter mapping table, the parameter mapping table including a mapping relationship between the style attribute and a size value; a coordinate determining module 4554, configured to determine main axis coordinates and secondary axis coordinates of each node based on the main axis size and the secondary axis size of each node; and a layout module 4555, configured to generate the to-be-laid out page according to the main axis size, the secondary axis size, the main axis coordinates, and the secondary axis coordinates of each node.

In some embodiments, the style attribute includes a node size limit attribute and a base value attribute, the node size limit attribute includes a main axis size limit attribute, and the main axis size determining module 4552 is further configured to: when an attribute value of the base value attribute of the node is not a default value, determine the attribute value of the base value attribute as an initial size of the node; or when an attribute value of the base value attribute of the node is a default value, and an attribute value of the main axis size limit attribute of the node is not a default value, determine the attribute value of the main axis size limit attribute as an initial size of the node; and determine the main axis size of the node based on the initial size and the style attribute of the node.

In some embodiments, the main axis size determining module 4552 is further configured to: when the attribute value of the base value attribute of the node is the default value, and the attribute value of the main axis size limit attribute of the node is the default value, if the node includes at least one child node, determine initial sizes of all child nodes of the node; sum the initial sizes of the child nodes, to obtain the initial size of the node; and determine the main axis size of the node based on the initial size and the style attribute of the node.

In some embodiments, the style attribute includes a text width limit attribute, and the main axis size determining module 4552 is further configured to: when the attribute value of the base value attribute of the node is the default value, and the attribute value of the main axis size limit attribute of the node is the default value, if the node does not include the child node, and an attribute value of the text width limit attribute of the node is a default value, obtain a text width occupied when a text in the node is arranged in a row, and determine the text width as the initial size of the node; or when the attribute value of the base value attribute of the node is the default value, and the attribute value of the main axis size limit attribute of the node is the default value, if the node does not include the child node, and the attribute value of the text width limit attribute of the node is not a default value, determine the attribute value of the text width limit attribute as the initial size of the node; and determine the main axis size of the node based on the initial size and the style attribute of the node.

In some embodiments, the main axis size determining module 4552 is further configured to: sum initial sizes of all child nodes of the parent node of the node, to obtain a sum of the initial sizes; and when the sum of the initial sizes is less than an attribute value of a main axis size limit attribute of the parent node, if an attribute value of a flexible growth attribute of the node is greater than 0, extend the initial size of the node based on the attribute value of the flexible growth attribute, to obtain the main axis size of the node; or when the sum of the initial sizes is less than an attribute value of a main axis size limit attribute of the parent node, if an attribute value of a flexible shrink attribute of the node is greater than 0, compress the initial size of the node based on the attribute value of the flexible shrink attribute, to obtain the main axis size of the node.

In some embodiments, the style attribute includes a secondary axis alignment attribute, and the secondary axis size determining module 4553 is further configured to: when an attribute value of the secondary axis alignment attribute of the node is not stretch, invoke the preset recursive function for the node, to obtain a leaf node of the node and a main axis size of the leaf node; determine a secondary axis size of the leaf node according to the main axis size of the leaf node and the parameter mapping table; transmit the secondary axis size of the leaf node to a parent node of the leaf node, and determine a secondary axis size of the parent node of the leaf node according to the secondary axis size of the leaf node, a main axis size of the parent node of the leaf node, and the parameter mapping table; and sequentially perform recursion until the secondary axis size of the node is determined.

In some embodiments, the secondary axis size determining module 4553 is further configured to: determine a target style attribute from the parameter mapping table, an attribute value of a main axis size limit attribute in the target style attribute being equal to the main axis size of the leaf node; and determine, from the parameter mapping table, a target size value corresponding to the target style attribute, and determine the target size value as the secondary axis size of the leaf node.

In some embodiments, the secondary axis size determining module 4553 is further configured to: when the attribute value of the secondary axis alignment attribute of the node is stretch, and an attribute value of a secondary axis size limit attribute of the parent node of the node is not a default value, determine an attribute value of a secondary axis limit attribute of the parent node as the secondary axis size of the node.

In some embodiments, the secondary axis size determining module 4553 is further configured to: when the attribute value of the secondary axis alignment attribute of the node is stretch, and the attribute value of the secondary axis size limit attribute of the parent node of the node is the default value, invoke the preset recursive function for the node, and determine an initial secondary axis size of the node according to the main axis size of the node and the parameter mapping table; obtain an initial secondary axis size of a brother node of the node; and determine a largest value in the initial secondary axis size of the node and the initial secondary axis size of the brother node as the secondary axis size of the node.

In some embodiments, the coordinate determining module 4554 is further configured to: invoke the preset recursive function for each node, and determine a main axis size, a secondary axis size, main axis coordinates, and secondary axis coordinates of each child node of each node based on the main axis size and the secondary axis size of each node.

An embodiment of this application provides a computer program product. The computer program product includes a computer program or a computer-executable instructions, and the computer program or the computer-executable instructions are stored in a computer-readable storage medium. A processor of an electronic device reads the computer-executable instructions from the computer-readable storage medium, and the processor executes the computer-executable instructions, to cause the electronic device to perform the foregoing page generation method in embodiments of this application.

An embodiment of this application provides a computer-readable storage medium, having computer-executable instructions or a computer program stored therein. When the computer-executable instructions or the computer program is executed by a processor, the processor is caused to perform the page generation method provided in embodiments of this application, for example, the page generation method shown in FIG. 3A.

In some embodiments, the computer-readable storage medium may be a memory such as a RAM, a ROM, a flash memory, a magnetic surface memory, an optical disk, or a CD-ROM; or may be any device including one of or any combination of the foregoing memories.

In some embodiments, the computer-executable instructions may be written in a form of a program, software, a software module, a script, or code in any programming language form (including a compilation or interpretation language, or a declarative or procedural language), and the computer-executable instructions may be deployed in any form, including being deployed as an independent program or being deployed as a module, component, subroutine, or another unit suitable for use in a computing environment.

In an example, the computer-executable instructions may but may not necessarily correspond to a file in a file system, may be stored in a part of the file for storing other programs or data, for example, stored in one or more scripts in a hypertext markup language (HTML) document, stored in a single file specially configured for the discussed program, or stored in a plurality of collaborative files (for example, files storing one or more modules, a subprogram, or a code part).

In an example, the computer-executable instructions may be deployed to be executed on one electronic device, on a plurality of electronic devices located at one site, or on a plurality of electronic devices distributed at a plurality of locations and connected by a communication network.

In conclusion, embodiments of this application can provide the float-pigment-layout layout engine that has better performance and supports more characteristics. In the page generation method supported by the float-pigment-layout layout engine, a plurality of layout manners including Flexbox can be supported, and better layout performance is achieved. In addition, compared with other layout engines, the float-pigment-layout layout engine is closer to the web specifications, supports more style attributes, and supports two types of compiling targets: native and WebAssembly.

The foregoing descriptions are merely embodiments of this application and are not intended to limit the protection scope of this application. Any modification, equivalent replacement, or improvement made without departing from the spirit and scope of this application shall fall within the protection scope of this application.

## Claims

1. A page generation method, applied to an electronic device, and the method comprising:
obtaining a node tree, the node tree comprising a plurality of nodes for representing content in a to-be-laid out page;
obtaining a style attribute of a target node from the plurality of nodes, and determining a main axis size of the target node based on the style attribute of the target node, wherein a parent node of the target node uses a flexible layout;
when the target node has at least one child node, obtaining a parameter mapping table, and obtaining a secondary axis size of the target node based on the main axis size of the target node and the parameter mapping table, the parameter mapping table comprising a mapping relationship between the style attribute and a size value;
determining main axis coordinates and secondary axis coordinates of each node based on the main axis size and the secondary axis size of each node; and
generating the to-be-laid out page according to the main axis size, the secondary axis size, the main axis coordinates, and the secondary axis coordinates of each node.

2. The method according to claim 1, wherein the style attribute comprises a node size limit attribute and a base value attribute, the node size limit attribute comprises a main axis size limit attribute, and the determining a main axis size of the target node based on the style attribute of the target node comprises:
when an attribute value of the base value attribute of the target node is not a default value, determining the attribute value of the base value attribute as an initial size of the target node; or
when an attribute value of the base value attribute of the target node is a default value, and an attribute value of the main axis size limit attribute of the target node is not a default value, determining the attribute value of the main axis size limit attribute as an initial size of the target node; and
determining the main axis size of the target node based on the initial size and the style attribute of the target node.

3. The method according to claim 1 or 2, wherein the determining a main axis size of the target node based on the style attribute of the target node comprises:
when the attribute value of the base value attribute of the target node is the default value, and the attribute value of the main axis size limit attribute of the target node is the default value, if the target node has at least one child node, invoking a preset recursive function for the target node, to determine initial sizes of all child nodes of the target node;
summing the initial sizes of all the child nodes, to obtain the initial size of the target node; and
determining the main axis size of the target node based on the initial size and the style attribute of the target node.

4. The method according to any one of claims 1 to 3, wherein the style attribute comprises the node size limit attribute, the base value attribute, and a text width limit attribute, and the determining a main axis size of the target node based on the style attribute of the target node further comprises:
when the attribute value of the base value attribute of the target node is the default value, and the attribute value of the main axis size limit attribute of the target node is the default value, if the target node does not has a child node, and an attribute value of the text width limit attribute of the target node is a default value, obtaining a text width occupied when a text in the target node is arranged in a row, and determining the text width as the initial size of the target node; or
when the attribute value of the base value attribute of the target node is the default value, and the attribute value of the main axis size limit attribute of the target node is the default value, if the target node does not have a child node, and the attribute value of the text width limit attribute of the target node is not a default value, determining the attribute value of the text width limit attribute as the initial size of the target node; and
determining the main axis size of the target node based on the initial size and the style attribute of the target node.

5. The method according to any one of claims 2 to 4, wherein the determining the main axis size of the target node based on the initial size and the style attribute of the target node comprises:
summing initial sizes of all child nodes of the parent node of the target node, to obtain a sum of the initial sizes; and
when the sum of the initial sizes is less than an attribute value of a main axis size limit attribute of the parent node, if an attribute value of a flexible growth attribute of the target node is greater than 0, extending the initial size of the target node based on the attribute value of the flexible growth attribute, to obtain the main axis size of the target node; or
when the sum of the initial sizes is less than an attribute value of a main axis size limit attribute of the parent node, if an attribute value of a flexible shrink attribute of the target node is greater than 0, compressing the initial size of the target node based on the attribute value of the flexible shrink attribute, to obtain the main axis size of the target node.

6. The method according to any one of claims 1 to 5, wherein the style attribute comprises a secondary axis alignment attribute, and the obtaining a secondary axis size of the target node based on the main axis size of the target node and the parameter mapping table comprises:
when an attribute value of the secondary axis alignment attribute of the target node is not stretch, invoking a preset recursive function for the target node, to obtain a leaf node of the target node and a main axis size of the leaf node;
determining a secondary axis size of the leaf node according to the main axis size of the leaf node and the parameter mapping table;
transmitting the secondary axis size of the leaf node to a parent node of the leaf node, and determining a secondary axis size of the parent node of the leaf node according to the secondary axis size of the leaf node, a main axis size of the parent node of the leaf node, and the parameter mapping table; and
sequentially performing recursion until the secondary axis size of the target node is determined.

7. The method according to claim 6, wherein the determining a secondary axis size of the leaf node according to the main axis size of the leaf node and the parameter mapping table comprises:
determining a target style attribute from the parameter mapping table, an attribute value of a main axis size limit attribute in the target style attribute being equal to the main axis size of the leaf node; and
determining, from the parameter mapping table, a target size value corresponding to the target style attribute, and determining the target size value as the secondary axis size of the leaf node.

8. The method according to any one of claims 1 to 7, wherein the method further comprises:
when the attribute value of the secondary axis alignment attribute of the target node is stretch, and an attribute value of a secondary axis size limit attribute of the parent node of the target node is not a default value, determining the attribute value of the secondary axis size limit attribute of the parent node as the secondary axis size of the target node.

9. The method according to any one of claims 1 to 8, wherein the obtaining a secondary axis size of the target node based on the main axis size of the target node and the parameter mapping table comprises:
when the attribute value of the secondary axis alignment attribute of the target node is stretch, and the attribute value of the secondary axis size limit attribute of the parent node of the target node is the default value, determining an initial secondary axis size of the target node according to the main axis size of the target node and the parameter mapping table;
obtaining an initial secondary axis size of a brother node of the target node; and
determining a largest value in the initial secondary axis size of the target node and the initial secondary axis size of the brother node as the secondary axis size of the target node.

10. The method according to claim 7 or 8, wherein the determining main axis coordinates and secondary axis coordinates of each node based on the main axis size and the secondary axis size of each node comprises:
invoking the preset recursive function for each node, and determining a main axis size, a secondary axis size, main axis coordinates, and secondary axis coordinates of each child node of each node based on the main axis size and the secondary axis size of each node.

11. A page generation apparatus, the apparatus comprising:
a node tree obtaining module, configured to obtain a node tree, the node tree comprising a plurality of nodes for representing content in a to-be-laid out page;
a main axis size determining module, configured to: obtain a style attribute of a target node from the plurality of nodes, and determine a main axis size of the target node based on the style attribute of the target node, the style attribute comprising at least a node size limit attribute, wherein a parent node of the target node uses a flexible layout;
a secondary axis size determining module, configured to: when the target node has at least one child node, obtain a parameter mapping table, and obtain a secondary axis size of the target node based on the main axis size of the target node and the parameter mapping table, the parameter mapping table comprising a mapping relationship between the style attribute and a size value;
a coordinate determining module, configured to determine main axis coordinates and secondary axis coordinates of each node based on the main axis size and the secondary axis size of each node; and
a layout module, configured to generate the to-be-laid out page according to the main axis size, the secondary axis size, the main axis coordinates, and the secondary axis coordinates of each node.

12. An electronic device, the electronic device comprising:
a memory, configured to store computer-executable instructions and a computer program; and
a processor, configured to implement, when executing the computer-executable instructions or the computer program stored in the memory, the page generation method according to any one of claims 1 to 10.

13. A computer-readable storage medium, having computer-executable instructions or a computer program stored therein, the computer-executable instructions or the computer program, when executed by a processor, implementing the page generation method according to any one of claims 1 to 10.

14. A computer program product, comprising computer-executable instructions or a computer program, the computer-executable instructions or the computer program, when executed by a processor, implementing the page generation method according to any one of claims 1 to 10.
